# EUROPÄISCHE PATENTSCHRIFT

(11) **EP 3 425 287 B1**
(45) Veröffentlichungstag und Bekanntmachung des Hinweises auf die Patenterteilung: **10.11.2021**
(21) Anmeldenummer: 18181107.6
(22) Anmeldetag: 02.07.2018
(51) Int. Cl.: F24D 3/14

(54) **FLÄCHENTEMPERIERUNGSSYSTEM**
SURFACE TEMPERING SYSTEM
SYSTÈME DE MISE EN TEMPÉRATURE DES SURFACES

(30) Priorität: 03.07.2017 DE 202017003466 U
(43) Veröffentlichungstag der Anmeldung: 09.01.2019
(73) Patentinhaber: REHAU AG + Co, 95111 Rehau (DE)
(72) Erfinder: Beck, Thomas, 90513 Zirndorf (DE); Burkhardt, Oliver, 91080 Uttenreuth (DE)

(56) Entgegenhaltungen:
- EP-A1- 3 144 138
- DE-U1-202010 009 133
- DE-U1-202015 100 914
- DE-U1-202016 107 044

## Beschreibung

Die vorliegende Erfindung betrifft ein Flächentemperierungssystem, das mindestens ein flexibles Kunststoffrohr, an dessen Außenseite ein zweites Element einer Klettverbindung angeordnet ist; eine Trägerfolie, wobei an einer Seite der Trägerfolie ein erstes Element der Klettverbindung angeordnet ist, so dass das/die flexible(n) Kunststoffrohr(e) lösbar unter Bildung der Klettverbindung an der Trägerfolie festlegbar ist/sind; einen formstabilen, flächigen Träger, der als wärme- und trittschalldämmende Dämmstoffmatte mit einer Mehrzahl von die Trägerfolie durchdringenden Stabilisierungsnähten ausgebildet ist; Klebeelemente, die die Stellen, an denen die Stabilisierungsnähte die Trägerfolie durchdringen, zumindest teilweise abdecken; und eine Verlegevorlage, die ein Verlegemuster des Kunststoffrohrs auf der Trägerfolie optisch darstellt, umfasst.

Flächentemperierungssysteme und darin einsetzbare flexible Kunststoffrohre sind aus dem Stand der Technik bekannt. Derartige Flächentemperierungssysteme werden zum Heizen und Kühlen von Räumen eingesetzt, wobei in Fußböden, Wänden oder Decken verlegte, von einem Wärmeträgermedium durchströmte Rohrleitungen in einer Estrich-, Putz- oder Betonschicht in Fußböden, Wänden oder Decken eingegossen sind. Vor dem Vergießen mit Estrich sind die Rohrleitungen üblicherweise durch geeignete Schienen oder Halter auf Trägern fixiert. Zur einfacheren und schnelleren Verlegung ist es bekannt, die Rohrleitungen mittels einer Klettverbindung auf den Trägern festzulegen. Beispielsweise ist ein Flächentemperierungssystem aus der DE 20 2016 107 044 U1 bekannt. Darüber hinaus beschreibt die DE 20 2010 009 133 U1 ein Flächentemperierungssystem mit einer Klett-Faserplatte aus einem formstabilen flächigen Träger mit einer Dicke zwischen 2,5 mm und 7 mm, auf den eine gewebeverstärkte Folie aufgebracht ist, die ein erstes Element einer Klettvorrichtung bildet, und einem flexiblen Rohr, das zumindest teilweise mit einem zweiten Element der Klettvorrichtung ummantelt ist. Der formstabile, flächige Träger wird vor dem Aufbringen des flexiblen Kunststoffrohrs und dem Vergießen mit Estrich auf einer zusätzlich erforderlichen Dämmstoffschicht verlegt. Nachteilig an dem in der DE 20 2010 009 133 U1 beschriebenen Flächentemperierungssystem wird gesehen, dass der dünne formstabile flächige Träger die hohen Anforderungen an die Mindestwärmeleitwiderstände von Dämmstoffmaterialien unter Flächentemperierungssystemen, wie sie in der EN 1264 normiert sind, nicht erfüllt. Hierzu ist zusätzlich eine bauseitig verlegte Dämmstoffschicht erforderlich, was einen weiteren kostenintensiven Arbeitsschritt bei der Installation der Flächentemperierungssysteme erforderlich macht.

Zur Lösung dieses Problems schlägt die DE 20 2015 100 914 U1 einen formstabilen, flächigen Träger vor, der als Dämmstoffschicht ausgebildet ist, wobei die ein Element der Klettverbindung tragende Trägerfolie an die Dämmschicht geheftet oder mit der Dämmschicht vernäht, verdrillt oder verflochten ist. Nachteilig daran wird angesehen, dass durch die Befestigung der Trägerfolie an der Dämmschicht mittels Anheften, Vernähen, Verdrillen oder Verflechten die Trägerfolie perforiert wird. Durch die mechanische Belastung auf der Baustelle einerseits sowie durch die Rückstellkräfte der flexiblen Kunststoffrohre andererseits besteht die Gefahr, dass die durch die Nähte verursachten Löcher in der Trägerfolie noch vergrößert werden. Die Funktion der Trägerfolie als flüssigkeitsdichte Schutzschicht ist dadurch beeinträchtigt. Beispielsweise kann Estrichanmachwasser in die Dämmstoffschicht eindringen, Feuchteschäden verursachen und die Funktion als Wärme- und Trittschalldämmung negativ beeinflussen. Faserdämmstoffe sind hier aufgrund ihrer Struktur besonders gefährdet. Um diesen Nachteil zu beheben, werden die Durchdringungstellen der Nähte durch die Trägerfolie ein bahnförmig aufgebrachtes Klebstoffmaterial abgedichtet. Um die Ansicht der Trägerfolie einfach zu halten und so die Einhaltung des geforderten Verlegemusters für das Rohr zu gewährleisten, ist das bahnförmige Klebstoffmaterial über einer Verlegevorlage auf der Klebefolie, die einem geforderten Verlegemuster des Kunststoffrohrs auf der Trägerfolie entspricht, angeordnet. Nachteilig an dieser Lösung wird jedoch angesehen, dass das der Verlegevorlage entsprechende Verlegen der Kunststoffrohre auf der Trägerfolie dazu führt, dass die Kunststoffrohre keinen sicheren Halt mehr an der Trägerfolie besitzen. Dies bringt die Gefahr mit sich, dass die Kunststoffrohre beim Vergießen mit Estrich zu einem Aufschwimmen neigen können.

An dieser Stelle setzt die vorliegende Erfindung ein, deren Aufgabe darin liegt, ein Flächentemperierungssystem zur Verfügung zu stellen, das die Nachteile des Stands der Technik überwindet. Insbesondere soll in dem erfindungsgemäßen Flächentemperierungssystem das Kunststoffrohr sicher an der Trägerfolie befestigt sein. Darüber hinaus soll das erfindungsgemäße Flächentemperierungssystem einen einfachen Aufbau aufweisen und leicht verlegbar sein.

Diese und andere Aufgaben werden durch ein Flächentemperierungssystem mit den Merkmalen des Anspruchs 1 gelöst. Bevorzugte Ausführungsformen des erfindungsgemäßen Flächentemperierungssystems sind in den abhängigen Ansprüchen beschrieben.

Gemäß der vorliegenden Erfindung wurde erkannt, dass die Gefahr des Aufschwimmens der Kunststoffrohre beim Vergießen mit Estrich dadurch zustande kommt, dass im Bereich der Klebstoffbahnen die für die Klettverbindung zwischen dem Kunststoffrohr und der Trägerfolie wirksamen Teile der Trägerfolie, nämlich das Gewirke oder das Klettvlies, nicht mehr vollständig zugänglich sind. Durch das Klebstoffmaterial werden die Schlaufen des Gewirkes oder des Klettvlies so in die Klebstoffmatrix eingebettet oder von dieser abgedeckt, dass sich der Hakenteil der Klettverbindung, der sich am Kunststoffrohr befindet, in diesen Bereichen nicht ausreichend in das Gewirke oder das Klettvlies einhaken kann. Daraus resultiert, dass das hakenbandumwicklete Kunststofftrohr nicht mehr über einen sicheren Halt an der Trägerfolie verfügt, so dass das Kunststoffrohr während der Estricheinbringung zum Aufschwimmen neigt. Daher ist es erfindungsgemß vorgesehen, die Verlegevorlage neben Klebstoffbahnen anzuordnen. Damit stehen in den für die die Bildung der Klettverbindung relevanten Bereiche das Gewirke oder das Klettvlies zur Verfügung. Eine ausreichende Anzahl von Haken des Klettmaterials am Kunststoffrohr kann in die Schlaufen des Gewirkes oder des Klettvlies einhaken, so dass ein ausreichend starker Halt des Kunststoffrohrs an der Trägerfolie gewährleistet ist. Die Gefahr des Aufschwimmens während der Estricheinbringung besteht nicht oder nur in reduziertem Umfang.

Dementsprechend liegt die vorliegende Erfindung in der Bereitstellung eines Flächentemperierungssystems, das mindestens ein flexibles Kunststoffrohr, an dessen Außenseite ein zweites Element einer Klettverbindung angeordnet ist; eine Trägerfolie, wobei an einer Seite der Trägerfolie ein erstes Element der Klettverbindung angeordnet ist, so dass das/die flexible(n) Kunststoffrohr(e) lösbar unter Bildung der Klettverbindung an der Trägerfolie festlegbar ist/sind; einen formstabilen, flächigen Träger, der als wärme- und/oder trittschalldämmende Dämmstoffmatte mit einer Mehrzahl von Stabilisierungsnähten ausgebildet ist; und Klebeelemente, die die Stellen, an denen die Stabilisierungsnähte die Trägerfolie durchdringen, zumindest teilweise abdecken; wobei das Flächentemperierungssystem erfindungsgemäß dadurch gekennzeichnet ist, dass es weiter eine Verlegevorlage, die ein Verlegemuster des Kunststoffrohrs auf der Trägerfolie optisch darstellt; umfasst, die Stabilisierungsnähte die Trägerfolie durchdringen und die Verlegevorlage in Bereichen, in denen das Kunststoffrohr zumindest annähernd parallel zu den Stabilisierungsnähten verläuft, von den Klebeelementen zumindest teilweise beabstandet ist.

Insbesondere liegt der Abstand zwischen der Verlegevorlage und den Klebeelementen in Bereichen, in denen das Kunststoffrohr zumindest annähernd parallel zu den Stabilisierungsnähten verläuft, im Bereich von 0,5 cm bis 5,0 cm, vorzugsweise im Bereich von 1,0 cm bis 3,5 cm und ist besonders bevorzugt mindestens so groß wie der Außendurchmesser des Kunststoffrohrs.

Wie er hierin verwendet wird, bedeutet der Begriff "Kunststoffrohr" ein Vollkunststoffrohr oder ein Metall-Kunststoff-Verbundrohr. In Bezug auf das erfindungsgemäß verwendete Kunststoffrohr wird der Begriff "flexibel" hierin so verwendet, dass das flexible Kunststoffrohr Biegeradien ermöglicht, die zur Verlegung eines Rohres für ein Flächentemperierungssystem erforderlich sind.

Wie er hierin verwendet wird, steht der Begriff "Klebeelemente" für alle Arten von Klebstoffmaterialien eigesetzt, sofern sie dazu geeignet sind, Durchtrittsstellen des Nahtmaterials durch die Trägerfolie wasserdicht zu verschließen. Dabei handelt es sich insbesondere um ein Klebstoffmaterial, insbesondere ein flüssiges Klebstoffmaterial, das bahnförmig auf die Durchtrittsstellen des Nahtmaterials durch die Trägerfolie aufgebracht wird. Ebenso ist ein punktuelles Aufbringen des Klebstoffmaterials auf die Durchtrittsstellen des Nahtmaterials durch die Trägerfolie möglich. Ebenso geeignet sind auch Klebebänder oder ähnliches.

Hinsichtlich des erfindungsgemäßen Flächentemperierungssystems ist es bevorzugt, wenn die Verlegevorlage auf die Trägerfolie aufgedruckt ist. Auf diese Weise kann die Verlegevorlage einfach und effektiv in das erfindungsgemäße Flächentemperierungssystem eingebracht werden.

Es kann auch günstig sein, wenn das die Stabilisierungsnähte bildende Nahtmaterial zumindest teilweise eine zur Trägerfolie ähnliche oder identische Farbe aufweist. Dadurch sind die Stabilisierungsnähte auf der Trägerfolie nicht oder nur sehr schwer zu erkennen. Die Verlegeraster bleibt dadurch eindeutig erkennbar, so dass auf der Baustelle eine sichere Verlegung des Kunststoffrohres anhand der Verlegevorlage gewährleistet ist und das Velegen der Kunststoffrohre nicht entlang der Stabilisierungsnähte erfolgt.

Alternativ oder zusätzlich dazu kann es auch von Nutzen sein, wenn die Klebeelemente zumindest teilweise transparent oder in einer zu der der Trägerfolie ähnlichen oder identischen Farbe ausgebildet sind. Auch dies trägt dazu bei, dass auf der Baustelle die eigentliche Verlegevorlage als solche eindeutig zu erkennen bleibt.

Es kann auch bevorzugt sein, wenn die Dämmstoffmatte ein Fasermaterial, insbesondere Mineralwolle, Glaswolle, Sisal, tierische Wollen und Haare, Kokos, Heu, Getreidestroh, Hanf, Steinwolle, Holzwolle, Holzwollverbundprodukte, Bambusfasern oder einen Verbund oder Mehrlagenverbund der genannten Materialien, umfasst.

Darüber hinaus kann es von Nutzen sein, wenn zumindest mehrere der Stabilisierungsnähte die gesamte Materialstärke der wärme- und/oder trittschalldämmenden Dämmstoffmatte durchsetzen. Dadurch verlaufen die Verbindungsnähte auf beiden Seiten der Dämmstoffmatte, was die Kompaktheit des resultierenden Verbundkörpers weiter erhöht und zu dessen Stabilität beiträgt. Darüber hinaus ist das Risiko verringert, dass die Stabilisierungsnähte bei einwirkender Belastung aus der Dämmstoffmatte herausgerissen werden.

Ebenso kann es hilfreich sein, wenn die Stabilisierungsnähte als Fäden, Bänder, insbesondere gurtartige Bänder, bevorzugt mit einer Breite von etwa 3 mm bis 5 mm, oder Draht, insbesondere dünne Drahtfäden, ausgebildet sind. Derartige Stabilisierungsnähte haben sich in der Praxis als besonders geeignet erwiesen.

Ebenso kann es von Nutzen sein, wenn die Stabilisierungsnähte in der Form eines Doppelkettenstiches in die Dämmstoffmatte eingreifen. Dies macht die resultierende Dämmstoffmatte noch kompakter.

Darüber hinaus kann es günstig sein, wenn durch die Stabilisierungsnähte eine Deckschicht auf eine Seite der Dämmstoffmatte aufgenäht ist. Dabei ist es besonders günstig, wenn die Deckschicht durch die Stabilisierungsnähte auf die Seite der Dämmstoffmatte aufgebracht ist, auf der dann die ein Element der Klettverbindung tragende Trägerfolie aufgebracht, insbesondere aufgenäht ist. Die aufgenähte Deckschicht kann aus einem Kunststoff, aus einem nachwachsendem Rohstoff, aus einem mineralischen Rohstoff, aus Textil, Papier, Glasvlies, Aluminium, etc. oder aus einem Verbundmaterial aus den genannten Werkstoffen bestehen. Alternativ kann die aufgenähte Deckschicht auch ein Gittergewebe sein. Bevorzugt ist die Deckschicht jedoch eine Kunststofffolie, besonders bevorzugt eine Kunststofffolie mit einem niedrigen Dampfdiffusionswiderstand.

Die Dämmstoffmatte kann als Einzelplatte, als Faltplatte oder auch als Rollenware ausgebildet sein.

Zur Verbindung zweier formstabiler, flächiger Träger eines erfindungsgemäßen Flächentemperierungssystems kann die Deckschicht und/oder die Trägerfolie wenigstens an einer Seite über den Rand der Dämmstoffmatte hinausragen. Die resultierenden Überlappungsstreifen, die bevorzugt über selbstklebende Eigenschaften verfügen, überlappen beim Verlegen eine benachbarte Dämmstoffmatte. Dadurch wird sehr einfach eine gegenüber Wasser undurchlässige Abdeckschicht für den aufzubringenden Estrich (angelehnt an die DIN 18560) oder Gussasphalt erzeugt.

Ebenso kann es hilfreich sein, wenn an der der Trägerfolie gegenüberliegenden Seite der Dämmstoffmatte eine untere Deckschicht angeordnet ist, die vorzugsweise ebenfalls an die Dämmstoffmatte angenäht ist. Dadurch wird die Gefahr, dass sich die Stabilisierungsnähte aus dem Material der Dämmstoffmatte heraustrennen weiter verringert. Die untere Deckschicht ist vorzugsweise als Verbundfolie ausgebildet, die besonders bevorzugt eine Metallschicht, vorzugsweise eine Aluminiumschicht, umfasst. Durch einen derartigen Aufbau lassen sich die isolierenden Eigenschaften des formstabilen, flächigen Trägers weiter erhöhen. Dabei ist es besonders hilfreich, wenn die untere Deckschicht neben der Metallschicht eine Trägerschicht, vorzugsweise aus Papier, und/oder eine Schutzschicht, vorzugsweise aus Polymermaterial, insbesondere Polyethylen oder Polypropylen, umfasst. Alternativ kann die untere Deckschicht auch aus einem Kunststoff, aus einem nachwachsendem Rohstoff, aus einem mineralischen Rohstoff, aus Textil, Papier, Glasvlies, Aluminium, etc. oder aus einem Verbundmaterial aus den genannten Werkstoffen bestehen oder auch ein Gittergewebe sein.

Hinsichtlich der Trägerfolie es weiter bevorzugt, wenn die Trägerfolie als Verbundfolie ausgebildet ist, die insbesondere an ihrer dem formstabilen, flächigen Trägern zugewandten Seite eine Metallschicht, vorzugsweise eine Aluminiumschicht, umfasst. Dabei ist es besonders bevorzugt, wenn die Trägerfolie neben der Metallschicht eine Trägerschicht, vorzugsweise aus Papier, und eine Schutzschicht, vorzugsweise aus Polymermaterial, insbesondere Polyethylen oder Polypropylen, umfasst.

Die Trägerfolie ist bevorzugt flächig mit dem ersten Element der Klettverbindung versehen, vorzugsweise ist die gesamte Fläche der Trägerfolie mit dem ersten Element der Klettverbindung versehen. Die so gebildete flächige Klettverbindung ermöglicht eine Rohrverlegung auf der gesamten Fläche der Trägerfolie in einem nahezu beliebigen Verlegemuster. Die Trägerfolie ist bevorzugt flächig oder partiell auf die Dämmstoffmatte oder die Deckschicht aufgebracht, insbesondere aufgeklebt oder aufkaschiert und bevorzugt aufgenäht. Die Anbindung der Trägerfolie kann dabei vollflächig oder mit Unterbrechungen erfolgen.

Hinsichtlich des flexiblen Kunststoffrohrs des erfindungsgemäßen Flächentemperierungssystems ist es bevorzugt, wenn das flexible Kunststoffrohr zwischen einer ersten Schicht aus polymerem Material, die ein Lumen des Kunststoffrohres umgibt, und dem zweiten Element der Klettverbindung eine flexible, elastische Ummantelung umfasst. Beim Verlegen des flexiblen Kunststoffrohrs auf dem mit der Trägerfolie versehenen formstabilen flächigen Träger passt sich die flexible, elastische Ummantelung aufgrund ihrer Elastitzität an die Oberfläche der Trägerfolie an, wenn auf das flexible Kunststoffrohr von außen Druck ausgeübt wird, beispielsweise indem der Verleger mit dem Fuß auf das erfindungsgemäße flexible Kunststoffrohr steigt oder mit der darauf drückt oder darüber streicht. Dadurch wird die Kontaktfläche zwischen dem flexiblen Kunststoffrohr und der Trägerfolie vergrößert, was zu einer stärker ausgebildeten Klettverbindung führt. Nach Wegfall des Drucks auf das flexible Kunststoffrohr bleibt diese Kontaktfläche aufgrund der Klettverbindung im Wesentlichen unverändert. Zur Korrektur der Verlegung kann die Klettverbindung gelöst und das Rohr in der gewünschten Anordnung verlegt werden. Ein Aufschwimmen des erfindungsgemäßen flexiblen Kunststoffrohrs im frisch verlegten Estrich ist weitestgehend ausgeschlossen.

Bevorzugt handelt es sich bei dem polymeren Material der ersten Schicht des flexiblen Kunststoffrohrs um vernetztes Polyethylen (PE-X) oder PE-RT. Wie er hierin verwendet wird, bedeutet der Begriff "PE-RT" ein Polyethylen mit erhöhter Temperaturbeständigkeit gemäß ISO 24033. Eine erste Schicht aus PE-X ist aufgrund der thermischen und mechanischen Eigenschaften (wie Schlagzähigkeit, Knickfestigkeit, Punktlastbeständigkeit) bevorzugt. Wie hierin verwendet wird, bedeutet der Begriff "PE-X" vernetztes Polyethylen, wobei Peroxid-vernetztes Polyethylen (PE-Xa), Silan-vernetztes Polyethylen (PE-Xb), Elektronenstrahl-vernetztes Polyethylen (PE-Xc) sowie azovernetztes Polyethylen (PE-Xd) umfasst sind. Gemäß der vorliegenden Erfindung wird Peroxid-vernetztes Polyethylen (PE-Xa) als bevorzugtes polymeres Material der ersten Schicht eingesetzt. Die Vernetzung zum vernetzten Polyethylen erfolgt vorzugsweise wie in der DE 102 51 152 B4 beschrieben. Darüber hinaus kann das polymere Material der ersten Schicht weiter einen Haftvermittler (vorzugsweise ein funktionalisiertes Polyolefinen, insbesondere ein Maleinsäureanhydridgepfropftes LLDPE (lineares Polyethylen geringerer Dichte)) und/oder eine Diffusionssperrschicht, insbesondere aus Polyvinylakohol (PVA) oder Ethylen-Vinylalkohol-Copolymer (EVOH) umfassen.

Darüber hinaus kann es sich als günstig erweisen, wenn das zweite Element der Klettverbindung spiralförmig oder doppelspiralförmig an der Außenseite des flexiblen Kunststoffrohrs angeordnet ist. Bei geringem Materialaufwand sorgt dies für eine dennoch hohe Häufigkeit der Kontaktstellen zwischen dem flexiblen Kunststoffrohr und dem Trägerfolie. Dabei hat es sich als materialeinsparend und damit kostengünstig erwiesen, wenn die flexible, elastische Ummantelung die erste Schicht aus polymerem Material teilweise ummantelt. Eine besonders effektive Variante hinsichtlich Materialaufwand für die flexible elastische Schicht und hoher Kontaktfläche zwischen dem flexiblen Kunststoffrohr und der Trägerfolie liegt in diesem Zusammenhang insbesondere dann vor, wenn die flexible, elastische Ummantelung dem Verlauf des zweiten Elements der Klettverbindung an der Außenseite des flexiblen Kunststoffrohrs folgt.

Die flexible, elastische Ummantelung kann die erste Schicht des flexiblen Kunststoffrohrs auch vollständig ummantelt. Dazu kann die flexible, elastische Ummantelung im Rahmen einer Coextrusion unmittelbar oder unter Einsatz einer Haftvermittlerschicht auf die erste Schicht aufgebracht werden. Eine bevorzugte einfache Verbindung zwischen der flexiblen, elastischen Ummantelung sowie der ersten Schicht und/oder dem zweiten Element der Klettverbindung erfolgt über eine Klebstoffschicht. Die flexible, elastische Ummantelung kann aus einem flexiblen Material, wie einem geschäumten Kunststoff (z.B. ein geschäumtes Polyethylen oder Polyurethan) hergestellt sein. Die flexible, elastische Ummantelung gibt dann bei Einwirkung eines äußeren Drucks aufgrund ihrer Flexibilität nach und ermöglicht auf diese Weise beim Aufdrücken des Kunststoffrohres auf die Trägerfolie die Ausbildung einer vergrößerten Auflagefläche und somit einer stärkeren Klettverbindung zwischen erfindungsgemäßem Kunststoffrohr und Trägerfolie.

Gemäß einer Ausführungsform der vorliegenden Erfindung wird ein Element der Klettverbindung durch Haken, Schlingen und/oder Fasern gebildet, die in ein Gewirke, ein Vlies, ein Veloursgewebe oder dergleichen des anderen Elements der Klettverbindung lösbar eingreifen können. Die Klettverbindung gewährleistet so eine lösbare Verbindung zwischen der Trägerfolie und dem flexiblen Kunststoffrohr, wodurch das flexible Kunststoffrohr auf der Trägerfolie reversibel festgelegt wird. Dabei ist es bevorzugt, wenn das zweite Element der Klettverbindung die Haken, Schlingen und/oder Fasern aufweist, während das erste Element der Klettverbindung durch das Gewirke, das Vlies, das Veloursgewebe oder ein Plüsch-, Frottee- oder sonstiges textiles Flächengebilde gebildet wird. Umgekehrt ist auch möglich, dass das zweite Element der Klettverbindung durch das Gewirke, das Vlies, das Veloursgewebe, das Plüsch-, Frottee- oder sonstiges textiles Flächengebilde gebildet wird, während das erste Element der Klettverbindung die Haken, Schlingen und/oder Fasern aufweist.

Das erfindungsgemäße Flächentemperierungssystem sowie einzelne Teile davon können auch zeilenweise oder schichtweise unter Verwendung eines zeilenaufbauenden oder schichtaufbauenden Fertigungsverfahrens (z. B. 3D-Druck) hergestellt werden.

Im Folgenden soll die vorliegende Erfindung unter Bezugnahme auf die in den Figuren dargestellten Ausführungsformen im Detail erläutert werden. Insoweit sich Teile oder Bauelemente in ihrer Funktion entsprechen, wird deren Beschreibung nicht in jeder der folgenden Figuren wiederholt. Es zeigen:
Fig. 1 eine Draufsicht auf eine mit einer Trägerfolie versehenen Dämmstoffmatte zur Verwendung in einem Flächentemperierungssystem gemäß einer Ausführungsform der vorliegenden Erfindung; und
Fig. 2 eine Querschnittsdarstellung eines Ausschnitts aus einem Flächentemperierungssystem gemäß einer Ausführungsform der vorliegenden Erfindung.

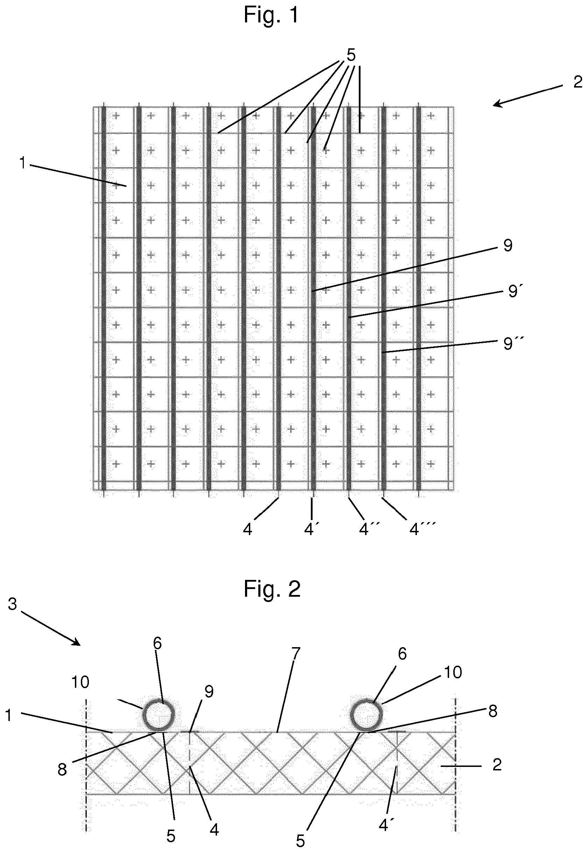

In Fig. 1 ist eine mit einer Trägerfolie 1 versehenen formstabilen, flächigen Träger 2, der in einem erfindungsgemäßen Flächentemperierungssystem 3 (Fig. 2) eingesetzt werden in einer Draufsicht gezeigt. Der formstabile, flächige Träger 2 ist als Dämmstoffmatte 2 ausgebildet. Die Dämmstoffmatte 2 ist vorzugsweise aus Mineralwolle oder einem anderen Fasermaterial hergestellt und dient zur Wärme- und Trittschalldämmung. Die Dämmstoffmatte 2 ist über ihre gesamte Materialdicke von einer Mehrzahl von Stabilisierungsnähten 4, 4', 4", 4"'durchzogen. In der dargestellten Ausführungsform erstrecken sich die Stabilisierungsnähte 4, 4', 4", 4"' in eine Richtung und verlaufen parallel zueinander. Die Stabilisierungsnähte 4, 4', 4", 4"' stabilisieren die innere Struktur der Dämmstoffmatte 2, so dass sie einen kompakten Verbundkörper bildet. Durch das vollständige Durchdringen der gesamten Materialdicke der Dämmstoffmatte 2 treten die Stabilisierungsnähte 4, 4', 4", 4"' an beiden Seiten aus der Dämmstoffmatte 2 aus, was die Kompaktheit des resultierenden Verbundkörpers weiter erhöht und zu dessen Stabilität beiträgt.

Auf einer Seite ist auf die Dämmstoffmatte 2 eine Trägerfolie 1 aufgebracht. Die Trägerfolie 1 ist ebenfalls von den Stabilisierungsnähten 4, 4', 4", 4"' durchsetzt, so dass die Trägerfolie 1 auf der Dämmstoffmatte 2 befestigt ist. Die Trägerfolie 1 umfasst eine Folie oder eine Verbundfolie. Darauf aufgedruckt ist eine Verlegevorlage 5, die ein gewünschtes Verlegemuster für ein flexibles Kunststoffrohr 6 des erfindungsgemäßen Flächentemperierungssystems 3 auf der Trägerfolie 1 optisch kennzeichnet. In der dargestellten Ausführungsform ist die Verlegevorlage 5 als Gitter mit quadratischen Feldern ausgebildet, in deren Zentrum jeweils ein Kreuz angeordnet ist. Auf die Trägerfolie 1 ist weiter ein erstes Element 7 einer Klettverbindung 8 aufgeklebt oder aufkaschiert. Bevorzugt ist das erste Element 7 der Klettverbindung 8 als Gewirke ausgebildet, kann alternativ aber auch als Vlies, Veloursgewebe, Plüsch-, Frottee- oder sonstiges textiles Flächengebilde ausgebildet sein kann.

Das Material der Stabilisierungsnähte 4, 4', 4", 4"' hat bevorzugt eine Farbe, die der Farbe der Trägerfolie 1 ähnelt oder zur Farbe der Trägerfolie 1 identisch ist. Dadurch sind die Stabilisierungsnähte 4, 4', 4", 4"" auf der Trägerfolie 1 nicht oder nur sehr schwer zu erkennen. Die Verlegevorlage 5 bleibt dadurch eindeutig erkennbar, so dass auf der Baustelle eine sichere Verlegung des flexiblen Kunststoffrohres 6 anhand der Verlegevorlage 5 gewährleistet ist und das Velegen der Kunststoffrohre 6 nicht entlang der Stabilisierungsnähte 4, 4', 4", 4"' erfolgt.

Die Trägerfolie 1 umfasst in dieser Ausführungsform eine insbesondere als Polymerschicht, vorzugsweise als Polyethylenschicht ausgebildete Trägerschicht, die über eine Klebstoffschicht wiederum mit einer Papierträgerschicht verbunden ist. Daran schließt sich eine Aluminiumfolie sowie eine ebenfalls als Polymerschicht, insbesondere als Polyethylenschicht ausgebildete Schutzschicht an. In anderen Ausführungsformen kann die Trägerfolie 1 als eine einschichtige Folie, insbesondere als Polymerfolie, vorzugsweise als Polyethylenfolie ausgebildet sein.

An den Stellen, an denen die Stabilisierungsnähte 4, 4', 4", 4"' die Trägerfolie 1 durchdringen, befinden sich Klebeelemente 9, 9', 9", durch die diese Stellen flüssigkeitsdicht verschlossen werden. Dadurch wird die Funktion der Trägerfolie 1 als flüssigkeitsdichte Schutzschicht insbesondere gegen das Eindringen von Estrichanmachwasser oder von Fließestrich selbst in die darunterliegende Dämmstoffmatte 2 wiederhergestellt. In der in Fig. 1 dargestellten Ausführungsform sind die Klebeelemente 9, 9', 9" als zähflüssiges Klebstoffmaterial ausgebildet, das bahnförmig auf die Durchtrittsstellen der Stabilisierungsnähte 4, 4', 4", 4"' durch die Trägerfolie 1 aufgebracht ist. In anderen Ausführungsformen wäre auch ein punktuelles Aufbringen des Klebstoffmaterials auf die Durchtrittsstellen der Stabilisierungsnähte 4, 4', 4", 4"' durch die Trägerfolie 1 oder ein Überkleben der Durchtrittsstellen mit Klebebändern oder ähnlichem möglich. Die Klebeelemente 9, 9', 9" sind bevorzugt transparent oder in einer zu der der Trägerfolie 1 ähnlichen oder identischen Farbe ausgebildet. Auch dies trägt dazu bei, dass auf der Baustelle die eigentliche Verlegevorlage 5 als solche eindeutig zu erkennen bleibt.

Die bandförmigen Klebeelemente 9, 9', 9" verlaufen parallel zu Linien der Verlegevorlage 5, sind zu diesen Linien jedoch beabstandet. Wird das flexible Kunststoffrohr 6 nun auf der Verlegevorlage 5 verlegt, steht zur Bildung der Klettverbindung 8 auf der Trägerfolie 1 ein hinreichender Teil des ersten Elements 7 der Klettverbindung 8 zur Verfügung. Daher besteht nur eine geringe Gefahr des Aufschwimmens des flexiblen Kunststoffrohrs 6 während der Estricheinbringung. Würden die Klebeelemente 9, 9', 9" hingegen auf den Linien der Verlegevorlage 5 verlaufen, würden die Klebeelemente 9, 9', 9" in diesen Bereichen das erste Elements 7 der Klettverbindung 8 auf der Trägerfolie 1 überdecken oder in ihrer Wirkung einschränken, so dass diese nicht oder nicht im erforderlichen Umfang zur Bildung der Klettverbindung 8 verfügbar wären. Dies würde die Gefahr des Aufschwimmens der flexiblen Kunststoffrohre 6 beim Vergießen mit Estrich erhöhen.

In Fig. 2 ist ein Ausschnitt aus einem Flächentemperierungssystems 3 gemäß einer Ausführungsform eines der vorliegenden Erfindung in einer Querschnittsdarstellung gezeigt. Das erfindungsgemäße Flächentemperierungssystem 3 gemäß dieser Ausführungsform umfasst ein flexibles Kunststoffrohr 6, eine Trägerfolie 1 sowie einen formstabilen, flächigen Träger 2, der als die in Fig. 1 gezeigte Dämmstoffmatte 2 ausgebildet ist.

Das flexible Kunststoffrohr 6 umfasst eine erste Schicht aus polymerem Material, die ein Lumen zur Führung eines Wärmeträgermediums umgibt. In der in Fig.2 dargestellten Ausführungsform ist die erste Schicht aus Peroxid-vernetztem Polyethylen (PE-Xa), um das herum in der angegeben Reihenfolge eine Haftvermittlerschicht und eine Diffusionssperrschicht angeordnet sind. Bevorzugt ist die erste Schicht sauerstoffdicht gemäß DIN 4726. Die erste Schicht wird vorzugsweise durch Coextrusion hergestellt. Die Außenseite des flexiblen Kunststoffrohres 6 bildet ein zweites Element 10 der Klettverbindung 8, das als Bänder ausgebildet ist, die in Form von im Wesentlichen parallel zueinander verlaufenden Spiralen um die erste Schicht angeordnet sind. Das zweite Element 10 der Klettverbindung 8 umfasst Haken, Fasern oder ähnliches und ist zur Wechselwirkung mit dem bevorzugt als Gewirke ausgebildeten ersten Element 7 der Klettverbindung 8 auf der Trägerfolie 1 geeignet. Das flexible Kunststoffrohr 6 ist in dem erfindungsgemäßen Flächentemperierungssystem 3 auf die Trägerfolie 1 aufgebracht.

Wie in Fig. 2 zu erkennen ist, ist das flexible Kunststoffrohr 6 in dem erfindungsgemäßen Flächentemperierungssystem 3 so auf der Trägerfolie 1 verlegt, dass das flexible Kunststoffrohr 6 über der aufgedruckten Verlegevorlage 5 zu liegen kommt und nicht mit den Klebeelementen 9, 9', 9" in Kontakt steht. Dadurch ist die Gefahr des Aufschwimmens des flexiblen Kunststoffrohrs 6 während der Estricheinbringung gering.

Zum Verlegen eines als Fußbodenheizung ausgebildeten erfindungsgemäßen Flächentemperierungselements 3 wird der mit der Trägerfolie 1 versehene formstabile, flächige Träger 3 zunächst auf dem Boden oder einer Zusatzdämmung vollflächig ggf. nach vorherigem Zuschneiden ausgelegt. Die Stöße zweier benachbarter formstabiler, flächiger Träger 2 werden vorzugsweise mit Klebebändern oder Hakenbändern als Klettverbindung untereinander bevorzugt flüssigkeitsdicht verbunden, vorzugsweise durch Überlappungsstreifen, die vorzugsweise selbstklebend ausgeführt sind. Daraufhin wird das flexible Kunststoffrohr 6 im gewünschten Muster auf der Trägerfolie 1 verlegt und angedrückt, so dass die Klettverbindung 8 ausgebildet wird. Daraufhin wird das flexible Kunststoffrohr 6 im gewünschten Muster auf der Trägerfolie 1 verlegt und angedrückt, so dass die Klettverbindung 8 ausgebildet wird. Zur Korrektur des Verlegemusters kann die reversibel ausgebildete Klettverbindung 8 durch Anheben des flexiblen Kunststoffrohrs 6 von der Trägerfolie 1 gelöst und in einem geänderten Verlegemuster wieder auf diese aufgebracht werden. Abschließend wird die Anordnung mit Estrich vergossen.

Die vorliegende Erfindung wurde unter Bezugnahme auf die in den Figuren gezeigte Ausführungsform der vorliegenden Erfindung im Detail beschrieben. Es versteht sich, dass die vorliegende Erfindung nicht auf die gezeigte Ausführungsform beschränkt ist, sondern sich der Umfang der vorliegenden Erfindung aus den beiliegenden Ansprüchen ergibt.

## Patentansprüche

1. Flächentemperierungssystem (3), umfassend:
- mindestens ein flexibles Kunststoffrohr (6), an dessen Außenseite ein zweites Element (10) einer Klettverbindung (8) angeordnet ist;
- eine Trägerfolie (1), wobei an einer Seite der Trägerfolie (1) ein erstes Element (7) der Klettverbindung (8) angeordnet ist, so dass das/die flexible(n) Kunststoffrohr(e) (6) lösbar unter Bildung der Klettverbindung (8) an der Trägerfolie (1) festlegbar ist/sind;
- einen formstabilen, flächigen Träger (2), der als wärme- und/oder trittschalldämmende Dämmstoffmatte (2) mit einer Mehrzahl von die Trägerfolie (1) durchdringenden Stabilisierungsnähten (4, 4', 4", 4"') ausgebildet ist; und
**dadurch gekennzeichnet, dass**
das Flächentemperierungssystem (3) weiter Klebeelemente (9, 9', 9") umfasst, die die Stellen, an denen die Stabilisierungsnähte (4, 4', 4", 4"') die Trägerfolie (1) durchdringen, zumindest teilweise abdecken;
das Flächentemperierungssystem (3) weiter eine Verlegevorlage (5) umfasst, die ein Verlegemuster des Kunststoffrohrs (6) auf der Trägerfolie (1) optisch darstellt; und die Verlegevorlage (5) in Bereichen, in denen das Kunststoffrohr (6) zumindest annähernd parallel zu den Stabilisierungsnähten (4, 4', 4", 4"') verläuft, von den Klebeelementen (9, 9', 9") zumindest teilweise beabstandet ist.

2. Flächentemperierungssystem (3) nach Anspruch 1, **dadurch gekennzeichnet, dass** die Verlegevorlage (5) auf die Trägerfolie (1) aufgedruckt ist.

3. Flächentemperierungssystem (3) nach Anspruch 1 oder Anspruch 2, **dadurch gekennzeichnet, dass** das die Stabilisierungsnähte (4, 4', 4", 4"') bildende Nahtmaterial zumindest teilweise eine zur Trägerfolie (1) ähnliche oder identische Farbe aufweist.

4. Flächentemperierungssystem (3) nach einem Ansprüche 1 bis 3, **dadurch gekennzeichnet, dass** die Klebeelemente (9, 9', 9") zumindest teilweise transparent oder in einer zu der der Trägerfolie (1) ähnlichen oder identischen Farbe ausgebildet sind.

5. Flächentemperierungssystem (3) nach einem der Ansprüche 1 bis 4, **dadurch gekennzeichnet, dass** die Dämmstoffmatte (2) ein Fasermaterial, insbesondere Mineralwolle, Glasfaser, Sisal, tierische Wollen und Haare, Kokos, Heu, Getreidestroh, Hanf, Steinwolle, Holzwolle, Holzwollverbundprodukte, Bambusfasern oder einen Verbund oder Mehrlagenverbund der genannten Materialien, umfasst.

6. Flächentemperierungssystem (3) nach einem der Ansprüche 1 bis 5, **dadurch gekennzeichnet, dass** zumindest mehrere der Stabilisierungsnähte (4, 4', 4", 4"') die gesamte Materialstärke der wärme- und/oder trittschalldämmenden Dämmstoffmatte (2) durchsetzen.

7. Flächentemperierungssystem (3) nach einem der Ansprüche 1 bis 6, **dadurch gekennzeichnet, dass** die Stabilisierungsnähte (4, 4', 4", 4"') als Fäden, Bänder oder Draht ausgebildet sind.

8. Flächentemperierungssystem (3) nach einem der Ansprüche 1 bis 7, **dadurch gekennzeichnet, dass** die Stabilisierungsnähte (4, 4', 4", 4"') in der Form eines Doppelkettenstiches in die Dämmstoffmatte (2) eingreifen.

9. Flächentemperierungssystem (3) nach einem der Ansprüche 1 bis 8, **dadurch gekennzeichnet, dass** durch die Stabilisierungsnähte (4, 4, 4", 4"') eine Deckschicht auf eine Seite der Dämmstoffmatte (2) aufgebracht ist.

## Claims

1. A surface heating and cooling system (3), comprising:
- at least one flexible plastics pipe (6), on the outside of which a second element (10) of a hook-and-loop connection (8) is arranged;
- a carrier sheet (1), wherein a first element (7) of the hook-and-loop connection (8) is arranged on one side of the carrier sheet (1) such that the flexible plastics pipe(s) (6) is/are releasably attachable to the carrier sheet (1) by forming the hook-and-loop connection (8);
- a dimensionally stable, flat carrier (2), which is configured as a heat insulating and/or impact-sound-absorbing insulation mat (2) having a plurality of stabilising seams (4, 4', 4", 4"') penetrating the carrier sheet (1);
**characterised in that**
the surface heating and cooling system (3) further comprises adhesive elements (9, 9', 9"), which at least partially cover the points at which the stabilising seams (4, 4', 4", 4"') penetrate the carrier sheet (1);
the surface heating and cooling system (3) further comprises a laying template (5), which visually represents a laying pattern for the plastics pipe (6) on the carrier sheet (1) and
the laying template (5) is at least partially spaced apart from the adhesive elements (9, 9', 9") in regions in which the plastics pipe (6) runs at least approximately parallel to the stabilising seams (4, 4', 4", 4"').

2. The surface heating and cooling system (3) according to claim 1, **characterised in that** the laying template (5) is printed on the carrier sheet (1).

3. The surface heating and cooling system (3) according to claim 1 or claim 2, **characterised in that** at least part of the sewing material forming the stabilising seams (4, 4', 4", 4"') has a colour that is similar or identical to the carrier sheet (1).

4. The surface heating and cooling system (3) according to one of claims 1 to 3, **characterised in that** the adhesive elements (9, 9', 9") are at least partially configured such that they are transparent or in a colour that is similar or identical to that of the carrier sheet (1).

5. The surface heating and cooling system (3) according to one of claims 1 to 4, **characterised in that** the insulation mat (2) comprises a fibrous material, in particular mineral wool, glass fibres, sisal, animal wool and hair, coconut, hay, cereal straw, hemp, rock wool, wood wool, wood wool composite products, bamboo fibres or a composite or multilayer composite of the aforesaid materials.

6. The surface heating and cooling system (3) according to one of claims 1 to 5, **characterised in that** at least a plurality of the stabilising seams (4, 4', 4", 4"') passes through the entire material thickness of the heat- and/or impact-sound-absorbing insulation mat (2).

7. The surface heating and cooling system (3) according to one of claims 1 to 6, **characterised in that** the stabilising seams (4, 4', 4", 4"') are configured as threads, tapes or wire.

8. The surface heating and cooling system (3) according to one of claims 1 to 7, **characterised in that** the stabilising seams (4, 4', 4", 4"') engage in the insulation mat (2) in the form of a double chain stitch.

9. The surface heating and cooling system (3) according to one of claims 1 to 8, **characterised in that** a covering layer is applied on to one side of the insulation mat (2) by the stabilising seams (4, 4, 4", 4"').

## Revendications

1. Système de mise en température de surfaces (3), comprenant :
- au moins un tuyau flexible en matière plastique (6), sur le côté extérieur duquel est disposé un second élément (10) d'un assemblage par ruban autoagrippant (8) ;
- une feuille de support (1), un premier élément (7) de l'assemblage par ruban autoagrippant (8) étant disposé sur un côté de la feuille de support (1), de telle sorte que le/les tuyau(x) flexible(s) en matière plastique (6) peut/peuvent être fixé(s) de manière détachable à la feuille de support (1) en formant l'assemblage par ruban autoagrippant (8) ;
- un support (2) plan indéformable, qui est réalisé sous la forme d'un mat en matériau isolant (2) pour isolation thermique et/ou isolation contre les bruits d'impact avec une pluralité de coutures de stabilisation (4, 4', 4", 4"') pénétrant dans la feuille de support (1) ;
**caractérisé en ce que**
le système de mise en température de surfaces (3) comprend en outre des éléments adhésifs (9, 9', 9"), qui recouvrent au moins en partie les emplacements auxquels les coutures de stabilisation (4, 4', 4", 4"') pénètrent dans la feuille de support (1) ;
le système de mise en température de surfaces (3) comprend en outre un modèle de pose (5), qui représente visuellement un motif de pose du tuyau en matière plastique (6) sur la feuille de support (1) et le modèle de pose (5) est espacé au moins en partie des éléments adhésifs (9, 9', 9") dans des zones, dans lesquelles le tuyau en matière plastique (6) s'étend au moins approximativement parallèlement aux coutures de stabilisation (4, 4', 4", 4"').

2. Système de mise en température de surfaces (3) selon la revendication 1, **caractérisé en ce que** le modèle de pose (5) est imprimé sur la feuille de support (1).

3. Système de mise en température de surfaces (3) selon la revendication 1 ou la revendication 2, **caractérisé en ce que** le matériau de couture formant les coutures de stabilisation (4, 4', 4", 4"') présente une couleur au moins en partie semblable ou identique à celle de la feuille de support (1).

4. Système de mise en température de surfaces (3) selon l'une des revendications 1 à 3, **caractérisé en ce que** les éléments adhésifs (9, 9', 9") sont réalisés au moins en partie transparents ou en une couleur semblable ou identique à celle de la feuille de support (1).

5. Système de mise en température de surfaces (3) selon l'une des revendications 1 à 4, **caractérisé en ce que** le mat en matériau isolant (2) comprend un matériau fibreux, en particulier de la laine minérale, de la fibre de verre, du sisal, des laines et poils animaux, du coir, du foin, de la paille, du chanvre, de la laine de roche, de la laine de bois, des produits composites à base de laine de bois, des fibres de bambou ou un matériau composite ou un matériau composite multicouches à base desdits matériaux.

6. Système de mise en température de surfaces (3) selon l'une des revendications 1 à 5, **caractérisé en ce qu'**au moins plusieurs des coutures de stabilisation (4, 4', 4", 4"') traversent toute l'épaisseur de matériau du mat en matériau isolant (2) pour isolation thermique et/ou isolation contre les bruits d'impact.

7. Système de mise en température de surfaces (3) selon l'une des revendications 1 à 6, **caractérisé en ce que** les coutures de stabilisation (4, 4', 4", 4"') sont réalisées sous la forme de fils, de rubans ou de fil métallique.

8. Système de mise en température de surfaces (3) selon l'une des revendications 1 à 7, **caractérisé en ce que** les coutures de stabilisation (4, 4', 4", 4"') s'insèrent dans le mat en matériau isolant (2) sous la forme d'un point de chaînette double.

9. Système de mise en température de surfaces (3) selon l'une des revendications 1 à 8, **caractérisé en ce qu'**une couche extérieure est appliquée sur un côté du mat en matériau isolant (2) au moyen des coutures de stabilisation (4, 4', 4", 4"').
